# EUROPÄISCHE PATENTANMELDUNG

(11) **EP 3 038 008 A1**
(43) Veröffentlichungstag der Anmeldung: **29.06.2016**
(21) Anmeldenummer: 15201957.6
(22) Anmeldetag: 22.12.2015
(51) Int. Cl.: G06F 21/57

(54) **VERFAHREN ZUR FREISCHALTUNG EINES ZUGRIFFS AUF IN EINEM GERÄT GESCHÜTZT GESPEICHERTE DATEN UND ANORDNUNG ZUR DURCHFÜHRUNG DES VERFAHRENS**

(30) Priorität: 22.12.2014 DE 102014019407
(71) Anmelder: TechniSat Digital GmbH, 01156 Dresden (DE)
(72) Erfinder: Renken, Kai-Uwe, 01099 Dresden (DE)

(57) **Zusammenfassung**

Der Erfindung liegt die Aufgabe zugrunde, ein Verfahren anzugeben, mit dem eine sichere Freischaltung des Zugriffs auf in einem Gerät (1) geschützt gespeicherte Daten mit einem reduzierten Verwaltungsaufwand ermöglicht wird. Die Aufgabe wird gelöst, indem das Gerät (1) einen zufälligen ersten Datensatz (12) generiert, der erste Datensatz (12) an eine Verschlüsselungseinheit (3) übermittelt und von dieser mittels eines Verschlüsselungsalgorithmus in einen verschlüsselten zweiten Datensatz (13) umgewandelt wird, der zweite Datensatz (13) an das Gerät (1) übermittelt wird, das Gerät (1) mittels eines Entschlüsselungsalgorithmus den zweiten Datensatz (13) in einen entschlüsselten dritten Datensatz (14) umwandelt, ein Vergleich des ersten Datensatzes (12) mit dem dritten Datensatz (14) im Gerät erfolgt, und bei einer Übereinstimmung des ersten Datensatzes (12) mit dem dritten Datensatz (14) der Zugriff für die Datenverarbeitungseinheit (2) freigeschaltet wird.

## Beschreibung

Die Erfindung betrifft ein Verfahren zur Freischaltung eines Zugriffs auf in einem Gerät geschützt gespeicherte Daten, bei welchem eine Überprüfung einer Zugriffsberechtigung einer Datenverarbeitungseinheit erfolgt und die Freischaltung in Abhängigkeit vom Ergebnis der Überprüfung erfolgt.

Die Erfindung betrifft außerdem eine Anordnung zur Freischaltung eines Zugriffs auf in einem Gerät geschützt gespeicherte Daten, bei welcher das Gerät mit einer Datenverarbeitungseinheit, welche nach der Freischaltung auf die geschützt gespeicherten Daten zugreift, verbunden ist.

Unter "Zugriff auf Daten" ist hierin das Öffnen einer Datei, das Bearbeiten einer Datei, das Lesen eines Speicherinhalts, das Manipulieren eines Speicherinhalts, das Ausführen eines Programms, das Anhalten eines Programms, das Installieren eines Programms oder das Einrichten eines Programms zu verstehen, ohne jedoch darauf beschränkt zu sein. Unter "Programm" ist hierin eine Software bzw. eine Anwendung (engl.: App) zu verstehen, die auf einer Vorrichtung zur elektronischen Datenverarbeitung ausführbar ist und als eine Folge von Anweisungen für das Lösen einer bestimmten Aufgabe einsetzbar ist.

Viele technische Geräte im Multimediabereich weisen eine programmierbare, meist prozessorgestützte Programmablaufsteuerung auf, mittels welcher die Funktion des jeweiligen Geräts im Normalbetrieb gesteuert wird. Darüber hinaus ermöglicht eine derartige Programmablaufsteuerung das Implementieren einer sogenannten Servicefunktion.

Die Servicefunktion ermöglicht beispielsweise das Durchführen eines Testbetriebs. Andere Servicefunktionen ermöglichen das Durchführen eines Kalibrierungsvorgangs oder das Festlegen eines Parameters. Mittels einer anderen Servicefunktion können außerdem sowohl im Testbetrieb wie auch im Normalbetrieb des Geräts Betriebszustände und/oder Fehlermeldungen erfasst und beispielsweise in einem sogenannten Vorgangsprotokoll abgespeichert werden.

Meist ist eine Limitierung des Zugriffs auf die Servicefunktionen sowie auch die gespeicherten Vorgangsprotokolle auf den Gerätehersteller selbst und/oder auf autorisierte Personen erwünscht.

Zu diesem Zweck wird eine auf derartigen Geräten installierte Verwaltung des Zugriffs benötigt.

Bekannt sind Verfahren zur Zugriffsverwaltung, beispielsweise zum Schutz eines Zugriffs auf geschützt gespeicherte, geräteinterne Daten, bei denen ein Zugriff nach einer Eingabe eines Passworts freigeschaltet wird. Ein Nachteil dieser Lösung besteht darin, dass der Zugriff mittels desselben Passworts auf eine Vielzahl von Geräten eines Herstellers oder zumindest eine Serie von Geräten eines Herstellers möglich ist. Wird dieses Passwort bekannt, besteht auch für die anderen Geräte kein Schutz mehr.

Alternativ kann jedes Gerät mit einem individuellen Passwort geschützt werden. Hierzu wird für jedes Gerät ein individuelles Passwort erzeugt, welches sowohl im Gerät selbst wie auch beim Hersteller abgespeichert werden muss.

Bekannt ist weiterhin die Nutzung eines geheimen Algorithmus zur Erstellung eines individuellen Gerätepassworts. Hierzu muss der geheime Algorithmus sowohl dem Gerät wie auch einer mit dem Gerät in Verbindung tretenden Einrichtung bekannt sein.

All diese Lösungen weisen Schwachstellen auf, welche nachfolgend erläutert werden.

Wird zum "Errechnen" des Passworts ein geheimer Algorithmus verwendet, beispielsweise unter Verwendung der Seriennummer eines Geräts als Startwert, so stellt der Algorithmus selbst eine erhebliche Schwachstelle dar. Nach dem Kerckhoff-Prinzip gilt: "Die Sicherheit eines Verschlüsselungsverfahrens darf nur von der Geheimhaltung des Schlüssels, nicht aber von der Geheimhaltung des Verschlüsselungsverfahrens an sich, abhängen."

Dies ist ein in der Forschung allgemein anerkanntes Axiom, leider jedoch nicht in der Industrie. So kam es in der Vergangenheit vor, dass durch sogenanntes Rekonstruieren (engl. Reverse Engineering) geheime Algorithmen rekonstruiert wurden und sich erhebliche Schwachstellen auffinden ließen. Ein populäres Beispiel dazu ist der "Mifare-Chip" des Herstellers NXP. Wird der geheime Algorithmus rekonstruiert, besteht kein Schutz mehr gegen unerlaubten Zugriff.

Wird alternativ ein sicheres Verschlüsselungsverfahren verwendet, und ein Hauptschlüssel, der in allen Geräten gleich bedatet ist, so kann der Hauptschlüssel aus der Hardware durch verschiedene Rekonstruktionstechniken extrahiert werden, so dass das Verschlüsselungsverfahren ebenfalls gebrochen wird. Es genügt, wenn dies bei einem Gerät gelingt.

Eine weitere Alternative besteht darin, für jedes Gerät einen individuellen Schlüssel und ein sicheres Verschlüsselungsverfahren nach dem Kerkhoff-Prinzip zu verwenden. Dadurch entsteht jedoch ein sehr hoher administrativer Aufwand für den Gerätehersteller. Er muss hierfür eine Datenbank mit allen produzierten Geräten pflegen. Er muss weiterhin sicherstellen, dass die Schlüssel eineindeutig sind, zum Beispiel über mehrere Geräteproduktionsstandorte hinweg. Außerdem muss er die Datenbank erheblich absichern, sowohl gegen Datenverlust als auch gegen Angriffe.

Die Aufgabe der Erfindung besteht darin, ein Verfahren anzugeben, mit welchem eine sichere Freischaltung des Zugriffs auf in einem Gerät geschützt gespeicherte Daten mit einem reduzierten Verwaltungsaufwand ermöglicht wird.

Die Aufgabe wird durch ein Verfahren gemäß Patentanspruch 1 und durch eine Anordnung gemäß Patentanspruch 9 gelöst. Weiterbildungen der Erfindung sind in den abhängigen Patentansprüchen angegeben.

Die Erfindung ermöglicht die Verwaltung eines Zugriffs auf in einem Gerät geschützt gespeicherte Daten. Die Verwaltung ist derart gestaltet, dass der Zugriff nur für Berechtigte freigeschaltet wird. In dieser Beschreibung wird lediglich auf einen Zugriff auf in dem Gerät geschützt gespeicherte Daten eingegangen. Das beschriebene Verfahren kann außerdem einen Zugriff auf ein Programm oder ein Programmteil, das in einem Gerät enthalten ist, sowie auf eine Servicefunktion des Geräts verwalten.

Die Erfindung wird nachfolgend erläutert.

Ein beispielsweise wegen eines Defekts zurückgesandtes, zu untersuchendes Gerät wird mit einer Datenverarbeitungseinheit zur Durchführung einer Fehleranalyse verbunden. Die Datenverarbeitungseinheit kann aber zunächst nicht auf die geschützt gespeicherten Daten des Geräts zugreifen, da der Zugriff auf diese Daten gesperrt ist.

Unter "verbunden" ist hierin zu verstehen, dass eine Verbindung, d.h. ein Zustand zum Übermitteln von Daten zwischen zwei Vorrichtungen, besteht. Eine solche Datenverbindung kann körperlich, zum Beispiel in Gestalt eines Datenübertragungskabels, oder unkörperlich ausgeprägt sein, zum Beispiel in Form einer Funkverbindung.

Das Verfahren zur Freischaltung eines Zugriffs auf in dem Gerät geschützt gespeicherte Daten wird durch das Setzen einer Steckbrücke (engl.: Jumper) oder das Betätigen eines Schalters im Gerät gestartet, wodurch ein Auswahlmenü bereitgestellt wird. Ferner wird ein Menüpunkt in dem Auswahlmenü ausgewählt, wodurch ein erster Datensatz erzeugt wird. Der erste Datensatz kann beispielsweise eine Zeichenkette, bestehend aus Zahlen und/oder Buchstaben, aufweisen, wobei aus Gründen der Zugriffssicherheit die Zeichenkette zufällig erzeugt wird und somit bei jeder Erzeugung eine andere Zeichenkette ist. Die Zeichenkette kann unter anderem eine hexadezimale Darstellung mehrerer Bytes sein.

Alternativ kann die Zeichenkette Binärwerte, Dezimalwerte, ASCII-Zeichen oder andere Werte bzw. Zeichen aufweisen.

Der erste Datensatz wird im Klartext an eine Verschlüsselungseinheit übermittelt. Das Übermitteln kann über eine zwischengeschaltete Datenverarbeitungseinheit erfolgen. In diesem Fall ist das Gerät nicht unmittelbar mit der Verschlüsselungseinheit verbunden, sondern mittelbar über die Datenverarbeitungseinheit.

Der erste Datensatz wird in der Verschlüsselungseinheit unter Nutzung eines ersten Schlüssels in einen verschlüsselten zweiten Datensatz umgewandelt. Der zweite Datensatz wird an das Gerät zurück übermittelt. Dabei kann der zweite Datensatz unmittelbar an das Gerät übermittelt werden, oder mittelbar über eine zwischengeschaltete Datenverarbeitungseinheit.

Das Gerät entschlüsselt unter Anwendung eines zweiten Schlüssels den zweiten Datensatz und erhält somit einen entschlüsselten dritten Datensatz. Da der erste Schlüssel und der zweite Schlüssel zu einem gemeinsamen Schlüsselpaar gehören, stimmt der Inhalt des ersten Datensatzes mit dem Inhalt des dritten Datensatzes überein. Bei dem Schlüsselpaar handelt es sich beispielsweise um einen privaten Schlüssel und einen öffentlichen Schlüssel einer asymmetrischen Verschlüsselung, zum Beispiel einer RSA (Rivest Shamir Adleman)-Verschlüsselung. Da das Schlüsselpaar nur Personen bekannt gegeben wird, die zum Zugriff auf die geschützten Daten berechtigt sind, ist sichergestellt, dass nur dieser Personenkreis Zugriff auf die geschützt gespeicherten Daten erhält.

Bei Übereinstimmung des ersten Datensatzes mit dem dritten Datensatz wird der Zugriff auf das Gerät und die darin geschützt gespeicherten Daten freigegeben oder freigeschaltet. Nun kann beispielsweise ein Vorgangsprotokoll von der Datenverarbeitungseinheit eingesehen oder geladen werden oder eine Analyse eines aufgetretenen Fehlers durchgeführt werden.

Zur verfahrensgemäßen Freischaltung eines Zugriffs muss zwischen dem Gerät und der Verschlüsselungseinheit lediglich für die Dauer des eigentlichen Verfahrensdurchlaufs eine Datenverbindung bestehen. Nach einer verfahrensgemäßen Freischaltung des Zugriffs bleibt die Freischaltung auch ohne eine Datenverbindung zur Verschlüsselungseinheit weiter bestehen. Somit kann die mit dem Gerät verbundene Datenverarbeitungseinheit weiterhin auf das Gerät sowie die darin geschützt gespeicherten Daten zugreifen.

Eine Sperrung des Zugriffs erfolgt nach Ablauf einer vorgegebenen Zeit, nach einer Spannungsunterbrechung am Gerät, nach einem Neustart des Geräts oder nach einer Trennung der Datenverbindung zwischen dem Gerät und der Datenverarbeitungseinheit.

Weitere Einzelheiten, Merkmale und Vorteile der Erfindung ergeben sich aus der nachfolgenden Beschreibung von Ausführungsformen der Erfindung, welche auf die folgenden Zeichnungen Bezug nimmt. Es zeigen:
- Fig. 1:: eine schematische Darstellung einer Ausführungsform der Anordnung gemäß der Erfindung,
- Fig. 2:: ein beispielhaftes Bootmenü, das beim Ausführen einer Ausführungsform des erfindungsgemäßen Verfahrens von einem Gerät angezeigt wird,
- Fig. 3:: eine detaillierte schematische Darstellung der Anordnung aus Figur 1, inklusive Datenverbindungen, Signalwegen und Funktionalitäten,
- Fig. 4:: eine schematische Darstellung einer Ausführungsform des erfindungsgemäßen Verfahrens und
- Fig. 5:: eine schematische Darstellung der Funktionseinheiten und Datenverbindungen einer zentralen Statusverwaltung.

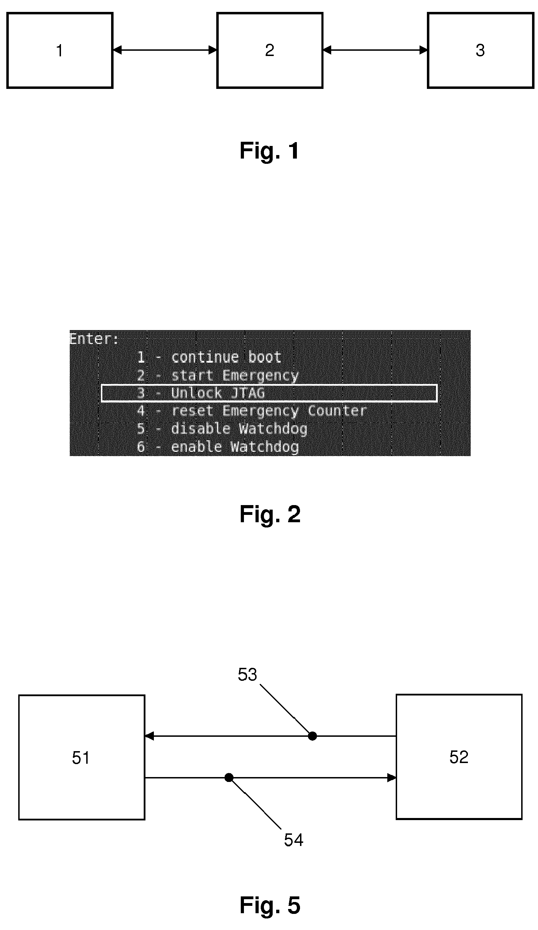

**Figur 1** zeigt eine schematische Darstellung einer Ausführungsform der Anordnung gemäß der Erfindung. Die Anordnung weist ein Gerät 1, bei dem es sich beispielsweise um ein digitales Fernseh- oder Radiogerät, ein Navigationsgerät, ein Radionavigationsgerät, ein Satellitenempfänger oder ein anderes Gerät handelt, eine mit dem Gerät 1 verbundene Datenverarbeitungseinheit 2, bei der es sich beispielsweise um einen Personal Computer (PC), einen Laptop oder einen Flachrechner (Tablet) handelt, sowie eine mit der Datenverarbeitungseinheit 2 in Verbindung stehende Verschlüsselungseinheit 3, die als Kryptografie-Server (engl.: Cryptoserver) ausgebildet ist, auf.

Die in Form von Pfeilen dargestellten Datenverbindungen sind derart ausgeführt, dass ein Übermitteln von Daten in beiden Datenübermittlungsrichtungen ermöglicht wird. Beim Übermitteln von Daten können sowohl serielle als auch parallele Bussysteme zur Anwendung kommen.

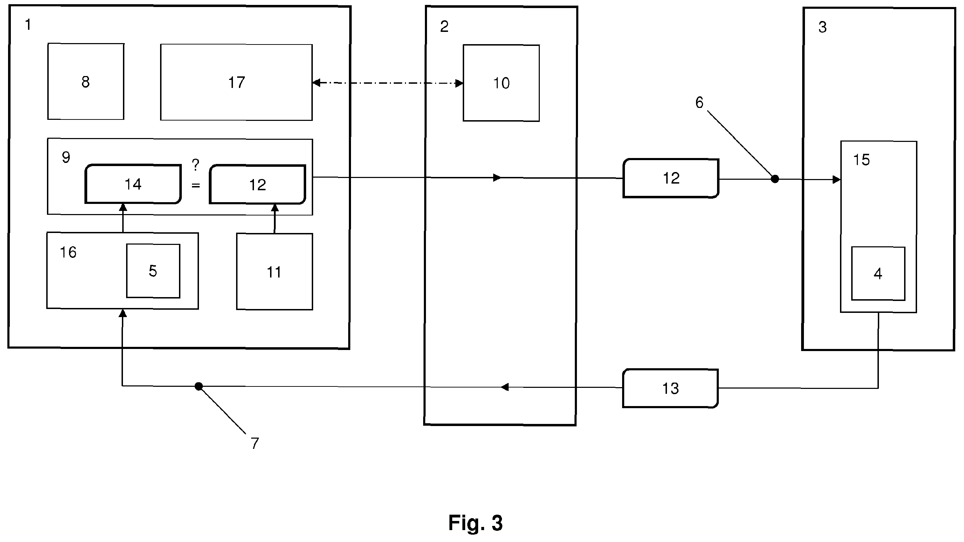

**Figur 3** zeigt eine detaillierte schematische Darstellung der Anordnung aus Figur 1, inklusive Datenverbindungen, Signalwegen und Funktionalitäten.

Das Gerät 1 beinhaltet einen Prozessor 8 zur Steuerung des Geräts 1, insbesondere bei denjenigen Verfahrensschritten, welche unter Verwendung des Geräts 1 ausgeführt werden. Das Gerät 1 weist zudem eine erste Speichereinheit 16 und eine zweite Speichereinheit 17 auf. Ferner verfügt das Gerät 1 über eine Vergleichseinheit 9 und eine Zufallseinheit 11.

Die Zufallseinheit 11 weist einen Zufallsgenerator (nicht gezeigt) auf. Der Zufallsgenerator ist eingerichtet, eine Zeichenkette zufällig zu erzeugen. Die zufällig erzeugte Zeichenkette bildet einen ersten Datensatz 12, der an die Vergleichseinheit 9 weitergeleitet werden kann.

Die Vergleichseinheit 9 ist eingerichtet, den ersten Datensatz 12 von der Zufallseinheit 11 und einen dritten Datensatz 14 von der ersten Speichereinheit 16 zu übernehmen. Die Vergleichseinheit 9 ist zudem in der Lage, den ersten Datensatz 12 (beziehungsweise eine Kopie des ersten Datensatzes 12) mit einer Anfrage 6 an die Verschlüsselungseinheit 3 zu übermitteln, wobei der erste Datensatz 12 in der Vergleichseinheit 9 zwischengespeichert bleibt. Somit kann der erste Datensatz 12 mit dem dritten Datensatz 14 verglichen werden, sobald der dritte Datensatz 14 in der Vergleichseinheit 9 vorliegt. Außerdem ist die Vergleichseinheit 9 eingerichtet, bei Übereinstimmung des ersten Datensatzes 12 mit dem dritten Datensatz 14 einen Zugriff auf die zweite Speichereinheit 17 freizuschalten.

Die erste Speichereinheit 16 weist ein einmalig programmierbares elektronisches Speicherelement (nicht gezeigt) auf, ein sogenanntes "One Time Programmable" (OTP), in welchem ein zweiter Schlüssel 5 gespeichert ist. Alternativ ist nur ein Teil der ersten Speichereinheit als ein solches Speicherelement ausgeführt. Die erste Speichereinheit 16 weist zudem einen Controller (nicht gezeigt) auf. Die erste Speichereinheit 16 ist damit eingerichtet, eine Antwort 7 zu empfangen, den darin enthaltenen zweiten Datensatz 13 unter Verwendung des zweiten Schlüssels 5 zu entschlüsseln und den derart erhaltenen dritten Datensatz 14 an die Vergleichseinheit 9 weiterzuleiten.

Die zweite Speichereinheit 17 ist eingerichtet, Daten und Vorgangsprotokolle in dem Gerät 1 geschützt zu speichern. Die zweite Speichereinheit 17 ist zum Beispiel als ein Testschaltkreis oder ein Diagnosezugriffsschaltkreis ausgebildet. Die zweite Speichereinheit 17 verfügt ferner über einen Controller (nicht gezeigt) und eine Schnittstelle (nicht gezeigt), zum Beispiel eine JTAG-Schnittstelle (Joint Test Action Group, IEEE-Standard 1149.1), mittels der ein Zugriff auf die Inhalte der zweiten Speichereinheit 17 möglich ist, zum Beispiel ein Zugriff auf Registerinhalte.

Die oben genannten Funktionseinheiten des Geräts 1 sind als Ein-Chip-System (engl.: System-on-a-chip) auf einem integrierten Schaltkreis vereinigt. Alternativ können die Funktionseinheiten auf unterschiedlichen integrierten Schaltkreisen angeordnet sein. Ferner kann das Gerät 1 zusätzlich zu den oben genannten Funktionseinheiten weitere Funktionseinheiten aufweisen.

Die Datenverarbeitungseinheit 2 ist eingerichtet, mit dem Gerät 1 Daten auszutauschen, zum Beispiel über eine geeignete Schnittstelle (nicht gezeigt). Die Datenverarbeitungseinheit 2 ist zudem mit einer Debugging-Einheit 10 ausgestattet. Die Debugging-Einheit 10 ist eingerichtet, die im Gerät 1 in der zweiten Speichereinheit 17 geschützt gespeicherten Daten und Vorgangsprotokolle auszulesen. Die Datenverarbeitungseinheit 2 weist weiterhin Vorrichtungen (nicht gezeigt) zur Analyse, zum Auswerten und zur grafischen Darstellung der geschützt gespeicherten Daten und Vorgangsprotokolle auf. Weiterhin kann mit der Datenverarbeitungseinheit 2 eine Anzeige oder ein Bildschirm (nicht gezeigt) verbunden sein, mit dem sich von der Datenverarbeitungseinheit 2 bereitgestellte Daten ausgeben lassen. Die Datenverarbeitungseinheit 2 weist außerdem eine Vorrichtung zur manuellen Eingabe von Daten (nicht gezeigt) auf.

Die Verschlüsselungseinheit 3 ist als ein Rechner (Computer) ausgeführt und weist ein Hardware-Sicherheitsmodul 15 auf. Das Hardware-Sicherheitsmodul 15 ist als eine von der Verschlüsselungseinheit 3 einfach separierbare Funktionseinheit ausgebildet, zum Beispiel als ein Steckmodul. Das Hardware-Sicherheitsmodul 15 verfügt über einen Controller (nicht gezeigt) und ein Speichermodul (nicht gezeigt), in dem der erste Schlüssel 4 gespeichert ist. Das Hardware-Sicherheitsmodul 15 ist eingerichtet, die Anfrage 6 zu empfangen und den darin enthaltenen ersten Datensatz 12 in einen verschlüsselten zweiten Datensatz 13 umzuwandeln. Das Hardware-Sicherheitsmodul 15 ist zudem in der Lage, den zweiten Datensatz 13 mit einer Antwort 7 an das Gerät 1 zu übermitteln.

Bei einer anderen Ausführungsform der Erfindung ist das Hardware-Sicherheitsmodul Bestandteil der Datenverarbeitungseinheit. Somit kann auf einen zusätzlichen Rechner als Verschlüsselungseinheit verzichtet werden. Damit wird jedoch auf die Möglichkeit verzichtet, mehrere Datenverarbeitungseinheiten mit derselben Verschlüsselungseinheit freizuschalten.

In Figur 3 sind zudem Signalwege und Funktionen dargestellt, die nachfolgend erläutert werden.

Beispielsweise durch das Setzen einer Steckbrücke, das Betätigen eines Tasters oder das Schalten eines Schalters wird ein Auswahlmenü, zum Beispiel das in **Figur 2** gezeigte Bootmenü, mit mehreren Auswahlmöglichkeiten angezeigt. Veranlasst durch das manuelle Auswählen einer bestimmten Auswahlmöglichkeit in dem Auswahlmenü wird in der Zufallseinheit 11 des Geräts 1 der erste Datensatz 12 generiert. Der erste Datensatz 12 kann beispielsweise eine Zeichenkette sein, die Ziffern und Buchstaben aufweist. Der erste Datensatz wird anschließend an die Vergleichseinheit 9 übermittelt. Die Vergleichseinheit 9 übermittelt den ersten Datensatz 12 mit der Anfrage (engl.: Request) 6 an das Hardware-Sicherheitsmodul 15 der Verschlüsselungseinheit 3.

Im Hardware-Sicherheitsmodul 15 wird der erste Datensatz 12 mittels eines Verschlüsselungsalgorithmus unter Verwendung des im Hardware-Sicherheitsmodul 15 gespeicherten ersten Schlüssels 4 in den zweiten Datensatz 13 verschlüsselt. Der zweite Datensatz 13 lässt, ohne Kenntnis des Verschlüsselungsalgorithmus, keinen Rückschluss auf den ursprünglichen ersten Datensatz 12 zu.

Der zweite Datensatz 13 wird vom Hardware-Sicherheitsmodul 15 mit der Antwort (engl.: Response) 7 an die erste Speichereinheit 16 übermittelt. Die Antwort 7 erfolgt automatisch, als Reaktion auf die Anfrage 6. Das Gerät 1 erstellt nun mittels eines Entschlüsselungsalgorithmus und des in der ersten Speichereinheit 16 gespeicherten zweiten Schlüssels 5 aus dem zweiten Datensatz 13 einen dritten Datensatz 14. Danach wird der dritte Datensatz 14 an die Vergleichseinheit 9 weitergeleitet. Hier werden der dritte Datensatz 14 und der erste Datensatz 12 miteinander verglichen.

Falls der erste Schlüssel 4, mit dem der erste Datensatz 12 verschlüsselt wurde, und der zweite Schlüssel 5, mit dem der zweite Datensatz 13 entschlüsselt wurde, zu demselben Schlüsselpaar gehören, stimmt der dritte Datensatz 14 mit dem ersten Datensatz 12 überein.

Wird in der Vergleichseinheit 9 des Geräts 1 eine Übereinstimmung des ersten Datensatzes 12 mit dem dritten Datensatz 14 festgestellt, wird darauf geschlossen, dass die mit der Verschlüsselungseinheit 3 in Verbindung stehende Datenverarbeitungseinheit 2 zum Zugriff auf die im Gerät 1 geschützt gespeicherten Daten berechtigt ist. Die Berechtigung ergibt sich aus dem nachgewiesenen Besitz des ersten Schlüssels 4, der mit dem zweiten Schlüssel 5 des Geräts 1 ein Schlüsselpaar bildet. In diesem Fall wird der Zugriff freigeschaltet. In der Figur 3 ist der Vorgang des Vergleichens des ersten Datensatzes 12 mit dem dritten Datensatz 14 in der Vergleichseinheit 9 mit einem Gleichheitszeichen und einem Fragezeichen dargestellt.

Die Freischaltung erfolgt mittels eines Freischaltsignals (nicht dargestellt), welches von der Vergleichseinheit 9 an die zweite Speichereinheit 17 gesendet wird. Nach erfolgter Freischaltung kann auf die zweite Speichereinheit 17 zugegriffen werden, zum Beispiel mit der Debugging-Einheit 10, wie in Figur 3 durch den strichpunktierten Pfeil dargestellt wird.

Die im Gerät 1 dargestellte zweite Speichereinheit 17 beinhaltet geschützt gespeicherte Daten und Vorgangsprotokolle, welche nach einer erfolgten Freischaltung mittels der Datenverarbeitungseinheit 2 ausgelesen werden können. Die Datenverarbeitungseinheit 2 kann dann beispielsweise eine Diagnose eines im Gerät 1 aufgetretenen Fehlers mittels der Debugging-Einheit 10 durchführen, so dass der Fehler im Gerät 1 aufgefunden wird.

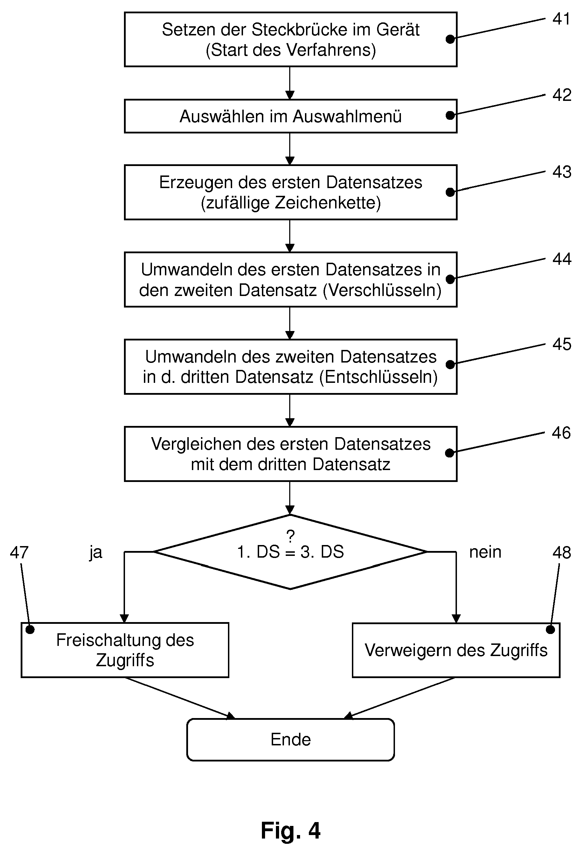

Im Folgenden wird zusätzlich auf **Figur 4** Bezug genommen, welche eine schematische Darstellung einer Ausführungsform des erfindungsgemäßen Verfahrens zeigt. Im vorliegenden Fall handelt es sich beim Gerät 1 um ein Rückläufergerät. Das erfindungsgemäße Verfahren wird zur Freischaltung eines Zugriffs auf die im Gerät 1 geschützt gespeicherten Daten für die Befundung sowie die Analyse des Geräts 1 angewandt.

Das erfindungsgemäße Verfahren wird in Schritt 41 durch ein initiales Ereignis, beispielsweise das Setzen einer Steckbrücke im Gerät 1, gestartet. Das Setzen der Steckbrücke, beispielsweise durch einen Servicetechniker, erfolgt zur Vorbereitung einer Diagnose an dem zu prüfenden Gerät 1.

Alternativ kann das initiale Ereignis das Betätigen eines Tasters oder eines Schalters im Gerät 1 aufweisen, der beim Betrieb des Geräts 1 einem Nutzer nicht zugänglich ist.

Als Reaktion auf dieses initiale Ereignis wird ein Auswahlmenü aufgerufen und angezeigt. In dem Auswahlmenü wird, wie in Figur 2 dargestellt, eine bestimmte Auswahlmöglichkeit von einem Nutzer ausgewählt (Schritt 42).

Nach dem Auswählen der Auswahlmöglichkeit wird durch das Verfahren der erste Datensatz 12 in der Zufallseinheit 11 des Geräts 1 erzeugt, wie im Schritt 43 dargestellt ist, und an die Vergleichseinheit 9 übergeben. Unter Verwendung eines Hilfsprogramms, zum Beispiel eines Startprogramms (engl.: Bootloader), wird dann in der Vergleichseinheit 9 eine Aufgabe (engl.: Challenge) generiert, gemäß der eine Berechtigung zum Zugriff durch den Besitz des ersten Schlüssels 4, der mit dem zweiten Schlüssel 5 korrespondiert, nachzuweisen ist. Zu diesem Zweck soll das Gerät 1 die Verschlüsselungseinheit 3 verifizieren, indem es eine Überprüfung auf Übereinstimmung des ersten Datensatzes 12 mit dem dritten Datensatz 14 durchführt.

Das Hilfsprogramm initiiert außerdem das Übermitteln des ersten Datensatzes 12 mit der Anfrage 6 an die Verschlüsselungseinheit 3. Der erste Datensatz 12 wird über die zur Diagnose am Gerät 1 geeignete, mit dem Gerät 1 verbundene Datenverarbeitungseinheit 2 an die Verschlüsselungseinheit 3 übermittelt. Alternativ kann der erste Datensatz auf direktem Wege an eine Verschlüsselungseinheit übermittelt werden.

Der nachfolgende Schritt 44 zeigt das Verschlüsseln des ersten Datensatzes 12 im Hardware-Sicherheitsmodul 15 der Verschlüsselungseinheit 3. Dabei wird der erste Datensatz 12 unter Verwendung des ersten Schlüssels 4 mit einem Verschlüsselungsalgorithmus in den zweiten Datensatz 13 umgewandelt.

Das Verschlüsseln erfolgt unter Nutzung eines Schlüssels eines aus zwei Schlüsseln bestehenden Schlüsselpaars, zum Beispiel mittels eines asymmetrischen bzw. asynchronen Verschlüsselungsverfahrens. Bei einem derartigen Verfahren wird der erste Schlüssel 4 als privater Schlüssel (engl.: Private Key) und der zweite Schlüssel 5 als öffentlicher Schlüssel (engl.: Public Key) bezeichnet, oder umgekehrt.

Der verschlüsselte zweite Datensatz 13 wird an das Gerät 1 mit einer Antwort 7 auf die Anfrage 6 übermittelt. Auch in diesem Fall erfolgt das Übermitteln zwischen dem Gerät 1 und der Verschlüsselungseinheit 3 über die mit dem Gerät 1 verbundene Datenverarbeitungseinheit 2. Alternativ kann der erste Datensatz auf direktem Wege an die Verschlüsselungseinheit übermittelt werden.

Im Gerät 1 wird der mit der Antwort 7 übermittelte zweite Datensatz 13 in den dritten Datensatz 14 umgewandelt, wie in Schritt 45 dargestellt. Hierfür wird, unter Verwendung des zweiten Schlüssels 5, ein Entschlüsselungsalgorithmus genutzt.

Nachfolgend wird, wie in Schritt 46 dargestellt, in der Vergleichseinheit 9 ein Vergleich des ersten Datensatzes 12 (1. DS) mit dem dritten Datensatz 14 (3. DS) durchgeführt. Geprüft wird, ob der erste Datensatz 12 mit dem dritten Datensatz 14 übereinstimmt. Der Verfahrensablauf teilt sich nachfolgend in Abhängigkeit vom Vergleichsergebnis in einen Ja-Zweig und einen Nein-Zweig auf.

Weil der dritte Datensatz 14 unter Verwendung des zweiten Schlüssels 5 aus dem zweiten Datensatz 13 erzeugt wurde, der wiederum unter Verwendung des ersten Schlüssels 4 aus dem ersten Datensatz 12 erzeugt wurde, wobei der erste Schlüssel 4 und der zweite Schlüssel 5 ein Schlüsselpaar bilden, stimmt der erste Datensatz 12 mit dem dritten Datensatz 14 überein. Das Gerät 1 kann somit verifizieren, dass die Verschlüsselung des ersten Datensatzes 12 von der Verschlüsselungseinheit 3 vorgenommen wurde. Da nur ein einziger erster Schlüssel 4 existiert, ist damit auch die Verschlüsselungseinheit 3 identifiziert. Das bewirkt eine Freischaltung des Zugriffs auf die im Gerät 1 geschützt gespeicherten Daten und Vorgangsprotokolle für die Datenverarbeitungseinheit 2, wie in Schritt 47 dargestellt.

Wenn dagegen der erste Datensatz und der dritte Datensatz nicht übereinstimmen würden, erfolgte keine Freischaltung des Zugriffs auf die im Gerät geschützt gespeicherten Daten und Vorgangsprotokolle, wie in Schritt 48 dargestellt. Mit anderen Worten würde, wenn der erste Datensatz mit dem dritten Datensatz nicht übereinstimmte, die Aufgabe, die Berechtigung zum Zugriff auf die im Gerät geschützt gespeicherten Daten durch den Besitz des zum zweiten Schlüssel korrespondierenden ersten Schlüssels nachzuweisen, nicht erfüllt. Daher würde der Zugriff verweigert.

Nachfolgend wird der Verfahrensdurchlauf beendet. Anschließend können zwischen der Debugging-Einheit 10 und der zweiten Speichereinheit 17 Daten ausgetauscht werden.

Die Freischaltung des Zugriffs auf das Gerät 1 wird nach Ablauf einer vorgegebenen Zeit, bei einer Stromunterbrechung des Geräts 1 oder beim Trennen einer Datenverbindung zwischen dem Gerät 1 und der Datenverarbeitungseinheit 2 beendet.

Das erfindungsgemäße Verfahren zeichnet sich insbesondere dadurch aus, dass kein Aufwand für das Verwalten von Zugriffsberechtigungen notwendig ist. Das Gerät 1 erzeugt beispielsweise eine zufällige Zeichenkette als ersten Datensatz 12 selbst. Durch diesen bei jedem Verfahrensstart verschiedenen ersten Datensatz 12 kann ausgeschlossen werden, dass ein einmal als Antwort 7 abgefangener zweiter Datensatz 13 zur Freischaltung eines Zugriffs auf das Gerät 1 missbraucht werden kann. Ein derartiger Missbrauch könnte zum Beispiel unter Verwendung einer Vorrichtung, die nicht zum Zugriff auf die im Gerät 1 geschützt gespeicherten Daten und Vorgangsprotokolle berechtigt ist, oder von einem nicht berechtigtem Nutzer betrieben werden.

Zur Wahrung der Sicherheit sieht das Verfahren vor, dass das Schlüsselpaar aus dem ersten Schlüssel 4 und dem zweiten Schlüssel 5 genau für einen Zugriff erstellt wird, der mittels des Verfahrens freizuschalten ist. Das Schlüsselpaar wird also nicht für andere Signaturen genutzt. Ferner können verschiedene Berechtigungsstufen eingerichtet werden, beispielsweise zum Signieren eines Schlüsselpaars.

Die Verschlüsselungseinheit 3 ist mit dem Gerät 1 und/oder der Datenverarbeitungseinheit 2 verbunden. Dabei reicht es aus, wenn die Datenverbindung während des in Figur 4 erläuterten Verfahrensablaufs besteht. Nachdem der Zugriff für die Datenverarbeitungseinheit 2 auf die im Gerät 1 geschützt gespeicherten Daten freigeschaltet wurde, ist diese Datenverbindung nicht mehr notwendig.

Das Verfahren muss bei jedem Neustart des Geräts 1 wiederholt werden, wenn erneut ein Zugriff freizuschalten ist.

Nur bei einem Übereinstimmen des ersten Datensatzes 12 mit dem dritten Datensatz 14 wird für die Datenverarbeitungseinheit 2 ein Zugriff auf das Gerät 1 freigeschaltet, zum Beispiel für einen Testbetrieb zum Testen und Debuggen einer in dem Gerät 1 installierten elektronischen Schaltung. Auf diese Weise können Funktionen von Baugruppen des Geräts 1 überprüft werden. Der Testbetrieb erlaubt außerdem einen Zugriff auf Funktionen und Speicherbereiche des Geräts 1, welche im Normalbetrieb nicht zugängig sind. Dies gilt insbesondere für Registerinhalte, zum Beispiel für Registerinhalte des im Gerät 1 angeordneten Prozessors 8, welche sensible Daten beinhalten können.

Ein freigeschalteter Zugriff berechtigt zudem, ein auf dem Gerät 1 ablaufendes Programm anzuhalten, einzurichten oder auszuführen. Auf diese Weise kann eine geräteeigene Sicherungseinrichtung, die das Gerät 1, vor allem die zweite Speichereinheit 17, vor unerwünschten Netzwerkzugriffen schützt, zum Beispiel eine Firewall, geöffnet und konfiguriert werden.

Bei einer anderen Ausführungsform der Erfindung wird eine Information über eine erfolgte Freischaltung des Zugriffs auf das Gerät für die Datenverarbeitungseinheit im Gerät derart gespeichert, dass die Information von einem anderen Gerät und/oder Programm abgerufen werden kann.

Bei einer weiteren Ausführungsform der Erfindung ist vorgesehen, dass ein von einer Freischaltung betroffenes Programm des Geräts, beispielsweise eine Firewall, beim Aufstarten des Geräts den Status der Freischaltung abfragt. Anhand dieser Abfrage kann das Programm Zugriff auf die im Gerät geschützt gespeicherten Daten erhalten, ohne selbst das erfindungsgemäße Verfahren starten zu müssen.

Es kann hierbei vorgesehen sein, dass der Status der Freischaltung nicht von jedem Programm des Geräts einzeln abgefragt wird. Stattdessen kann ein zentraler Dienst eingerichtet werden, welcher von allen Programmen des Geräts abgefragt werden kann.

Dazu wird ein Vermittlerprogramm, zum Beispiel ein Trusted Service Manager (TSM), verwendet, das den Status der Freischaltung des Zugriffs auf die im Gerät 1 geschützt gespeicherten Daten ausliest bzw. ermittelt. Das Vermittlerprogramm wird im Gerät 1 ausgeführt. Das Vermittlerprogramm kann abhängig vom festgestellten Status der Freischaltung weitere Netzwerkdienste freischalten. Somit kann ein Zugriff auf das Gerät 1 mittels bekannter Kommunikationsprotokolle, z. B. Telnet (Telecommunication Network), FTP (File Transfer Protocol) oder SSH (Secure Shell), ermöglicht werden, um neben dem Zugriff über die Debugging-Einheit 10 auch einen Zugriff über Netzwerkschnittstellen auf das Gerät 1 herzustellen. Das Auslesen kann verschlüsselt, d.h. abgesichert gegen Unbefugte, erfolgen. Die entsprechende Vorgehensweise ist im Anhang detailliert dargestellt.

### Anhang

Das Übermitteln von Daten zwischen einem Geräteprogramm und dem zentralen Dienst basiert auf Nachrichten (engl.: Messages). Der Aufbau einer solchen Nachricht wird nachfolgend an einem Beispiel erläutert:
Das Geräteprogramm übermittelt an den zentralen Dienst eine Statusanfrage, welche wie folgt aufgebaut ist:
   **Statusanfrage (verschlüsselt (Nutzdaten, Token für Statusantwort), erster HMAC (erstellt mit Dummy-Token)),**
      wobei unter "Token" ein Sitzungsbezeichner (engl.: session identifier), unter "HMAC" ein auf einer kryptografischen Streuwertfunktion basierender Nachrichtenauthentifizierungscode (engl.: Keyed-Hash Message Authentication Code, kurz HMAC) und unter "Dummy Token" ein Platzhalter für einen Sitzungsbezeichner zu verstehen sind.
Eine auf die Statusanfrage folgende Statusantwort ist wie nachfolgend gezeigt aufgebaut:
   **Statusantwort (verschlüsselt (Nutzdaten, Token), zweiter HMAC (erstellt mit Token aus der Statusanfrage))**
      Das in der Statusantwort beinhaltete Token dient hierbei nur dem Schutz vor einem sogenannten Replay-Angriff, bei welchem der Angreifer zuvor aufgezeichnete Daten sendet, um eine fremde Identität vorzutäuschen.

**Figur 5** zeigt eine schematische Darstellung der Funktionseinheiten und Datenverbindungen einer zentralen Statusverwaltung. Insbesondere zeigt Figur 5 ein erstes Programm 51, zum Beispiel einen Trusted Service Manager, welches als zentraler Dienst für das Anzeigen des Status der zweiten Speichereinheit 17 fungiert. Weiterhin wird ein zweites Programm 52 gezeigt, welches zum Beispiel eine im Gerät 1 ausgeführte Firewall repräsentiert. Außerdem werden, dargestellt in Form von Pfeilen, die Statusanfrage 53 und die Statusantwort 54 gezeigt.

Die Statusanfrage 53 und die Statusantwort 54 werden auf einem sicheren Kanal übermittelt. Dazu werden die Statusanfrage 53 und die Statusantwort 54 verschlüsselt. Die Verschlüsselung erfolgt unter Verwendung eines symmetrischen Verschlüsselungsverfahrens, zum Beispiel mit einem AES 128-bit Schlüssel.

Zur Erstellung des HMACs wird SHA256 verwendet, ein sicherer Streuwert-Algorithmus (engl.: secure hash algorithm, SHA). Der Token weist eine Zufallszahl auf, so dass unabhängig vom Inhalt der eigentlichen Statusanfrage bzw. Statusantwort immer eine andere verschlüsselte Statusanfrage bzw. Statusantwort generiert wird. Die Nutzdaten (engl.: Payload) können jeweils den Wert "wahr" oder "falsch" annehmen, wobei "wahr" eine Freischaltung bedeutet und "falsch" demzufolge keine Freischaltung bedeutet.

## Patentansprüche

1. Verfahren zur Freischaltung eines Zugriffs auf in einem Gerät (1) geschützt gespeicherte Daten, bei welchem eine Überprüfung einer Zugriffsberechtigung einer Datenverarbeitungseinheit (2) erfolgt und die Freischaltung in Abhängigkeit vom Ergebnis der Überprüfung erfolgt, **dadurch gekennzeichnet, dass** das Gerät (1) einen zufälligen ersten Datensatz (12) generiert, der erste Datensatz (12) an eine Verschlüsselungseinheit (3) übermittelt und von dieser mittels eines Verschlüsselungsalgorithmus in einen verschlüsselten zweiten Datensatz (13) umgewandelt wird, der zweite Datensatz (13) an das Gerät (1) übermittelt wird, das Gerät (1) mittels eines Entschlüsselungsalgorithmus den zweiten Datensatz (13) in einen entschlüsselten dritten Datensatz (14) umwandelt, ein Vergleich des ersten Datensatzes (12) mit dem dritten Datensatz (14) im Gerät (1) erfolgt und bei einer Übereinstimmung des ersten Datensatzes (12) mit dem dritten Datensatz (14) der Zugriff für die Datenverarbeitungseinheit (2) freigeschaltet wird.

2. Verfahren nach Anspruch 1, **dadurch gekennzeichnet, dass** die Freischaltung des Zugriffs nach Ablauf einer vorgegebenen Zeit, bei einer Stromunterbrechung des Geräts (1) oder beim Trennen einer Datenverbindung zwischen dem Gerät (1) und der Datenverarbeitungseinheit (2) beendet wird.

3. Verfahren nach Anspruch 1 oder 2, **dadurch gekennzeichnet, dass** die Umwandlung in den zweiten Datensatz (13) durch den Verschlüsselungsalgorithmus mittels eines ersten Schlüssels (4) und die Entschlüsselung des verschlüsselten zweiten Datensatzes (13) durch den Entschlüsselungsalgorithmus mittels eines zweiten Schlüssels (5) erfolgt, wobei der erste Schlüssel (4) und der zweite Schlüssel (5) zu demselben Schlüsselpaar gehören.

4. Verfahren nach Anspruch 3, **dadurch gekennzeichnet, dass** der erste Schlüssel (4) und der zweite Schlüssel (5) ein Schlüsselpaar eines asymmetrischen Verschlüsselungsverfahrens darstellen.

5. Verfahren nach Anspruch 3 oder 4, **dadurch gekennzeichnet, dass** der erste Schlüssel (4) in der Verschlüsselungseinheit (3) gespeichert wird und der zweite Schlüssel (5) in dem Gerät (1) gespeichert wird.

6. Verfahren nach einem der Ansprüche 3 bis 5, **dadurch gekennzeichnet, dass** die Verschlüsselungseinheit (3) mittels des von ihr verwendeten ersten Schlüssels (4) identifiziert wird.

7. Verfahren nach einem der Ansprüche 1 bis 6, **dadurch gekennzeichnet, dass** der erste Datensatz (12) eine Zeichenkette ist, die Zahlen und/oder Buchstaben aufweist.

8. Verfahren nach einem der Ansprüche 1 bis 7, **dadurch gekennzeichnet, dass** eine Information über die erfolgte Freischaltung des Zugriffs auf die in dem Gerät (1) geschützt gespeicherten Daten für die Datenverarbeitungseinheit (2) im Gerät (1) gespeichert wird, sodass die Information von einem anderen Gerät und/oder einem Programm abgerufen werden kann.

9. Anordnung zur Freischaltung eines Zugriffs auf in einem Gerät (1) geschützt gespeicherte Daten, welche neben dem Gerät (1) eine Verschlüsselungseinheit (3) und eine Datenverarbeitungseinheit (2) aufweist und derart eingerichtet ist, dass eine Überprüfung einer Zugriffsberechtigung der Datenverarbeitungseinheit (2) erfolgt und die Freischaltung des Zugriffs in Abhängigkeit vom Ergebnis der Überprüfung erfolgt, **dadurch gekennzeichnet, dass** das Gerät (1) eine Zufallseinheit (11) aufweist, die zum Generieren eines zufälligen ersten Datensatzes (12) eingerichtet ist; das Gerät (1) eine erste Speichereinheit (16) mit einem zweiten Schlüssel (5) aufweist, die zum Ausführen eines Entschlüsselungsalgorithmus, so dass ein verschlüsselter zweiter Datensatz (13) in einen entschlüsselten dritten Datensatz (14) umgewandelt wird, eingerichtet ist; das Gerät (1) eine Vergleichseinheit (9) aufweist, die zum Übermitteln des ersten Datensatzes (12) an die Verschlüsselungseinheit (3), zum Vergleichen des ersten Datensatzes (12) mit dem dritten Datensatz (14) und zur Freischaltung des Zugriffs für die Datenverarbeitungseinheit (2) bei einer Übereinstimmung des ersten Datensatzes (12) mit dem dritten Datensatz (14) eingerichtet ist; und die Verschlüsselungseinheit (3) ein Hardware-Sicherheitsmodul (15) mit einem ersten Schlüssel (4) aufweist, das zum Ausführen eines Verschlüsselungsalgorithmus, so dass der erste Datensatz (12) in den zweiten Datensatz (13) umgewandelt wird, und zum Übermitteln des zweiten Datensatzes (13) an das Gerät (1) eingerichtet ist.

10. Anordnung nach Anspruch 9, **dadurch gekennzeichnet, dass** das Gerät (1), die Datenverarbeitungseinheit (2) und die Verschlüsselungseinheit (3) über ein Bussystem miteinander verbunden sind.
